(19) **Europäisches Patentamt / European Patent Office / Office européen des brevets**

(11) **EP 2 993 000 B1**

(12) **EUROPEAN PATENT SPECIFICATION**

(45) Date of publication and mention
of the grant of the patent:
**15.05.2019 Bulletin 2019/20**

(51) Int Cl.:
***B25J 9/16*** *(2006.01)*  ***G05B 19/406*** *(2006.01)*
***G01L 5/28*** *(2006.01)*  ***G01L 3/24*** *(2006.01)*

(21) Application number: **14183490.3**

(22) Date of filing: **04.09.2014**

(54) **Evaluation of dynamic brake torque in a robot**

Auswertung des dynamischen Bremsdrehmoments in einem Roboter

Évaluation du couple de freinage dynamique dans un robot

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.03.2016 Bulletin 2016/10**

(73) Proprietor: **ABB Schweiz AG**
**5400 Baden (CH)**

(72) Inventor: **Moberg, Stig**
**724 81 Västerås (SE)**

(74) Representative: **Savela, Reino Aleksi**
**ABB AB**
**Intellectual Property**
**Forskargränd 7**
**721 78 Västerås (SE)**

(56) References cited:
**WO-A1-2007/079950**   **US-A1- 2002 069 697**
**US-A1- 2010 058 850**   **US-A1- 2014 000 355**

**Description**

TECHNICAL FIELD OF THE INVENTION

The present invention relates to the field of robots. The invention more particularly relates to a method, device, and computer program product for evaluating a dynamic brake torque of a robot joint as well as to a robot arrangement comprising such a device.

DESCRIPTION OF RELATED ART

The quality of the brake of a robot is important for many reasons, such as safety.

EP 2 10978 933 describes a dynamic test method for a robot. In this document a robot joint is brought to a standstill and the position, time and deceleration are then used as measures of the quality of the brake.

WO 2007/079950 relates to a method for testing the brake function of a robot drive, wherein the robot drive is operated in a position-controlled manner. The brake is actuated during the running of the robot drive. After a predetermined length of time after the actuation of the brake, the speed of the robot drive is measured and then the measured speed is compared to a predetermined reference value.

One parameter of the brake that may be of interest to investigate is the brake torque. A good enough brake torque is therefore an indication that the robot is safe to be operated.

One type of brake torque test that may be used is a dynamic brake torque test. In such a test, a robot joint is first set to move and then the brake is applied and the brake torque determined.

US 2010/058850 describes a method to test a brake of a robot that has a number of axes, an actuator associated with one of the axes, a brake associated with this axis that is set up to at least reduce a movement of this axis, and a torque sensor associated with this axis, which determines the torque acting on this axis. The brake is activated, the torque acting on the axis is determined by the torque sensor given an activated brake, and the functional capability of the brake is assessed in a processor based on an evaluation of the torque determined by the torque sensor.

Such determinations are often made using additional sensors on the joint, for instance torque sensors.

These may be complicated to mount and use, especially since the joint is moving.

It would therefore be of interest to simplify the structure used for investigating the brake while at the same time allowing the brake torque to be evaluated in a safe and reliable way.

SUMMARY OF THE INVENTION

The present invention is therefore directed towards safely and reliably investigating the dynamic brake torque of a robot motor without relying on extensive testing structures.

This object is according to a first aspect of the present invention achieved through a method for evaluating a dynamic brake torque of a robot joint with a motor controlled via a robot controller comprising an integrating control element and a proportional control element having a proportional control factor, the method comprising the steps of:

- providing the robot controller with a speed command;
- upon reaching a stable speed level set by the speed command, ensuring that no integrating action is performed by the robot controller;
- activating a brake of the motor; and
- determining if the dynamic brake torque of the brake fulfils a dynamic brake torque requirement using the speed command, the proportional control factor and the speed of the motor after brake activation.

The object is according to a second aspect achieved through a device for evaluating a dynamic brake torque of a robot joint with a motor controlled via a robot controller comprising an integrating control element and a proportional control element having a proportional control factor,

the device comprising a brake torque evaluating unit configured to

- provide the robot controller with a speed command;
- upon the motor reaching a stable speed level set by the speed command, ensure that no integrating action is performed by the robot controller;
- activate a brake of the motor; and
- determine if the dynamic brake torque of the brake fulfils a dynamic brake torque requirement using the speed command, the proportional control factor and the speed of the motor after brake activation

The object is according to a third aspect achieved through a robot arrangement comprising an industrial robot with least one motor for moving a corresponding joint, a robot controller comprising an integrating control element and a proportional control element having a proportional control factor and a device for evaluating a dynamic brake torque of the robot joint using the motor and robot controller,

Where the device comprises a brake torque evaluating unit configured to

- provide the robot controller with a speed command;
- upon the motor reaching a stable speed level set by the speed command, ensure that no integrating action is performed by the robot controller;
- activate a brake of the motor; and
- determine if the dynamic brake torque of the brake fulfils a dynamic brake torque requirement using the speed command, the proportional control factor and the speed of the motor after brake activation.

The object is according to a fourth aspect achieved through a computer program product for evaluating a dynamic brake torque of a robot joint with a motor controlled via a robot controller, the computer program product comprising a data carrier with computer program code which when run in a brake torque evaluating unit of a device for evaluating a dynamic brake torque, causes the brake torque evaluating unit to:

- provide the robot controller with a speed command;
- upon the motor reaching a stable speed level set by the speed command, ensure that no integrating action is performed by the robot controller;
- activate a brake of the motor; and
- determine if the dynamic brake torque of the brake fulfils a dynamic brake torque requirement using the speed command, the proportional control factor and the speed of the motor after brake activation.

The present invention has many advantages. It allows safe and reliable investigation of the dynamic brake torque of a robot motor. This is also done without relying on extensive testing structures or the use of sensors on the robot joints. The invention is furthermore easy to implement and can easily be retrofitted into a robot controller.
It should be emphasized that the term "comprises/comprising" when used in this specification is taken to specify the presence of stated features, integers, steps or components, but does not preclude the presence or addition of one or more other features, integers, steps, components or groups thereof.

BRIEF DESCRIPTION OF THE DRAWINGS

The present invention will now be described in more detail in relation to the enclosed drawings, in which:

fig. 1 schematically shows a robot arrangement comprising a robot and a dynamic brake torque evaluating device,
fig. 2 schematically shows a joint of the robot with a gear box and a motor,
fig. 3 schematically shows a block schematic of the dynamic brake torque evaluating device connected to the robot, where the device comprises a brake torque evaluating unit and a robot controller,
fig. 4 shows a number of method steps being performed in a method for evaluating a dynamic brake torque,
fig. 5 shows a curve of the simulated motor speed when performing the method steps and as a comparison a curve of the dynamic brake torque and motor torque, and fig. 6 schematically shows a computer program product in the form of a CD Rom disc comprising computer program code for compensating drift.

DETAILED DESCRIPTION OF EMBODIMENTS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

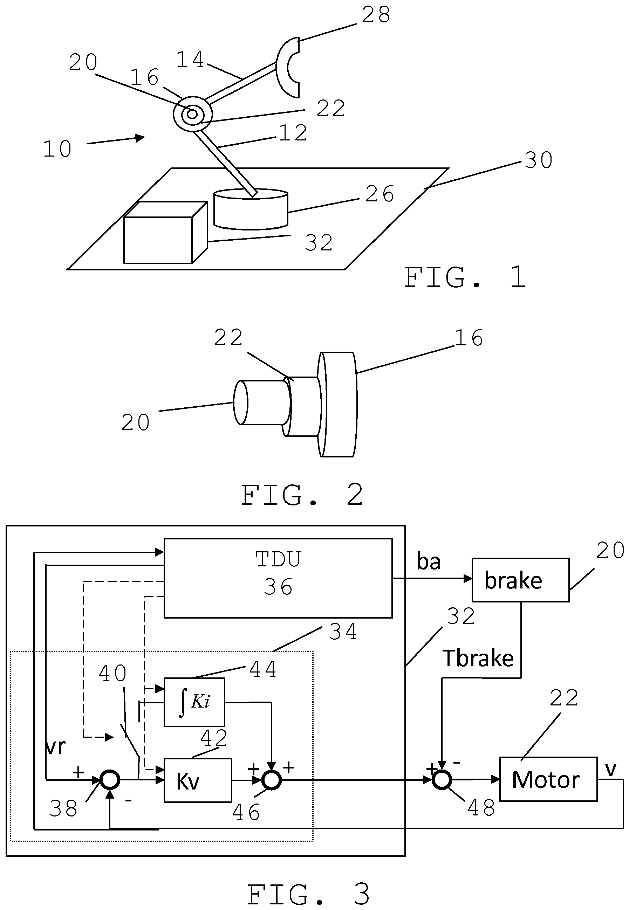

Fig. 1 schematically shows a robot arrangement comprising a robot 10 and a brake torque evaluating device 32. The robot 10 comprises a number of arm sections 12, 14 connected to each other via joints 16. The robot 10 shown in fig. 1 is simplified and therefore only two arm sections are shown; a first and a second arm section 12 and 14, connected to each other via a joint. This means that in this example only one joint 16 which joins the first and second arm sections 12 and 14 is shown. It should however be realized that a robot normally comprises many more arm sections, typically six and consequently also several more joints, that may be controlled.

The first arm section 12 is here connected to a foundation 26. In this way the robot 10 is attached to the foundation 26. There is normally also a joint joining the first arm section 12 to this foundation 26 for allowing the first arm section 12 to be moved in relation to the foundation 26. Thereby the foundation may provide a first axis of rotation. However, this joint has been omitted from fig. 1 for the sake of clarity. The robot normally comprises a tool holder for allowing a tool to be connected to the robot 10. Such a tool is typically connected to the outermost arm section of the robot, i.e. to the arm section furthest away from the foundation 26. Consequently, in fig. 1 one such tool 28 is shown as being attached to the second arm section 14.

In order to move the second arm section 14 in relation to the first arm section 12 there is provided an actuator 22 at the joint 16, which actuator 22 may be implemented as a motor, for instance as a servo motor for moving the second arm around a second axis of rotation defined by the joint 16. At this actuator there is furthermore provided a brake 20.

In some variations it is also possible that there is one or more sensors connected to the motor. Such a sensor could be provided for sensing the speed of the motor 22.

The joint 16, with actuator 22 and brake 20 is also schematically shown in fig. 2, which figure shows a perspective view of these elements.

In the embodiment shown in fig. 1, the brake torque evaluating device 32 comprises a robot controller, which robot controller is connected to the robot 10 and more particularly to the actuator 22. It should here be realized that the robot controller may be provided as a separate entity. It does thus not have to be a part of the brake torque evaluating device 32.

A block schematic of the brake torque evaluating device 32 with the robot controller 34 connected to different parts of the robot 10 is shown in fig. 3. In this figure the brake torque evaluating device 32 is also shown as comprising a brake torque evaluating unit 36, which communicates with the robot controller 34 in order to determine the dynamic brake torque.

The robot controller 34 comprises a proportional control element 42 and an integrating control element 44 connected in parallel with each other. The brake torque evaluating unit 36 provides a desired motor speed value vr to a first input of a subtracting element 38, the output of which is connected to an input of the proportional control element 42 as well as to an input of the integrating control element 44 via a switch 40, which switch 40 is controlled by the brake torque evaluating unit 36. An output of the proportional control element 42 is connected to a first input of an adding element 46 and an output of the integrating control element 44 is connected to a second input of the adding element 46. An output of the adding element 46 is ultimately used to control the motor 20. The torque evaluating unit 36 is connected to the brake 20 for providing a brake activation signal ba to the brake. The brake 20 in turns provides a physical brake torque Tbrake to the motor 22, which in turn provides a speed measurement v to a second input of the first subtracting element 38.

The proportional control element 42 here performs proportional control using a proportional control factor Kv, while the integrating control element 44 performs integrating control using an integrating control factor Ki, where both factors may be fixed or possible to vary. It should here also be realized that it is possible to omit the switch 40 and disable integration by setting Ki to zero.

It is of interest to evaluate the dynamic brake torque of the motor, i.e. the brake torque of a braking activity being applied by the brake 20 of the motor 22 to a joint that is rotating, such as joint 16. The dynamic brake torque should furthermore be possible to evaluate in a safe and reliable way with a minimum of additional sensors. It may especially be of interest to omit sensors from the joint, since it may be moving. The invention addresses this issue.

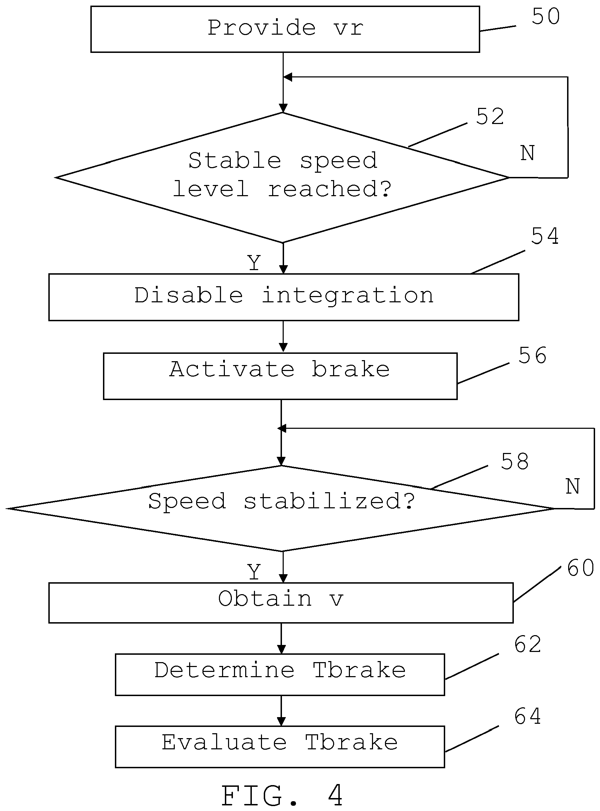

Now a first embodiment will be described with reference also being made to fig. 4, which shows a flow chart of a number of method steps in a method for evaluating a dynamic brake torque of a robot joint using the motor 22 controlled via the robot controller 34.

Initially integrating activity is enabled. When the switch is provided, this means that the switch 40 is closed when the method is started. In any event, the integrating factor Ki also has a value that performs integrating action in the control. The value is thus different from zero and with advantage positive. Thereby the integrating control element 44 is active and connected in parallel with the proportional control element 42 when the method is started.

Now the torque evaluating unit 36 provides the controller 34 with a speed command vr, step 50, which may be a command that the motor 22 is to rotate with a certain speed. This speed command may be a step command from zero to the desired speed. A difference between the speed command vr and an actual measured speed v is provided to both the proportional and integrating control elements 42 and 44, which perform proportional and integrating control using the proportional control factor Kv and the integrating control factor Ki. The integrating control factor Ki may as an example be provided as $\int \frac{Kv}{Ti}$ , where Ti is the integration time constant.

The difference between the speed command vr and the actual measured speed v, which has undergone both proportional and integrating control, is then in a known way employed by the controller 34 to control the motor 22 of the robot 10. The actual speed of the motor obtained by the control is in this case also provided from the robot 10 to the first subtracting element 38 of the controller 34 for use in the control. In this way the difference between the speed command vr and the speed measurement v is used in a PI controller made up of the proportional and integrating control elements 42 and 44.

The speed measurements v may furthermore also be provided to the torque evaluating unit 36 by the controller 34.

The torque evaluating unit 36 furthermore ensures that no integrating action is performed by the controller upon the motor speed reaching a stable speed level set by the speed command.

For this reason, the torque evaluating unit 36 may analyze the speed measurements in order to determine if the motor has been controlled to a stable speed level corresponding to the speed command. When a stable level is reached, transients should have been removed and vibrations damped out. Thereby the integrating control element 44 has removed the influence from gear box friction and gravity.

The torque evaluating unit 36 may thus monitor the speed measurements v and if no stable level has been reached, step 52, then regular control using both the integrating control element 44 and proportional control element 42 is continued.

As an alternative to monitoring speed measurements it is possible to wait a pre-determined time after the use of the speed command, which time has been set using knowledge about when a stable level occurs for the speed command. The time is thus set so that a stable level is reached before or when the time expires.

If a stable speed level has been reached where vibrations have been damped out, step 52, the torque evaluating unit 36 thus ensures that no integrating activity is performed. This may be done through the torque evaluating unit 36 controlling the controller 34 to discontinue or disable the integrating action or control, step 54. This may be done through the torque evaluating unit 36 controlling the switch 40 to be opened, thereby disconnecting the integrating control element 44 from the control. As an alternative or in addition to actuating a switch, it is possible for the torque evaluating unit 36 to set the integrating control factor Ki to zero. The integrating element 36 may continue and provide friction and gravitational torque as a constant output also after deactivation.

Thereafter the torque evaluating unit 36 activates the brake of the motor 22, step 56, which may be done through sending a brake command ba to the brake 20. This will in turn cause the brake 20 to apply a brake torque Tbrake on the motor 22.

The torque evaluating unit 36 also determines if the dynamic brake torque of the brake fulfils a dynamic brake torque requirement using the speed command vr, the proportional control factor Kv and the speed v of the motor after brake activation. The speed command, the proportional control factor and the speed v may be the only inputs used for this determination.

In the first embodiment, the determination is made through the torque evaluating unit 36 monitoring the measured speed v in order to determine if the speed has been stabilized to a new lower level after application of the brake, i.e. after the brake activation. If it has not, step 58, the torque evaluating unit 36 continues monitoring.

However, if the speed has been stabilized, step 58, then the torque evaluating unit 36 obtains at least one speed measurement v of the speed of the motor 22 in order to form a speed measure, step 60. It may here obtain the speed measurement v that is used by the robot controller 34. It may more particularly obtain the speed measurement received from the motor.

The speed measure may be made up of only one speed measurement. As an alternative it is possible to obtain more than one speed measurement and form a speed measure based on this plurality of speed measurements, for instance using averaging. It is thus possible to average a number of speed measurements obtained after speed stabilization in order to form the speed measure.

This is in the first embodiment followed by the torque evaluating unit 36 determining a dynamic brake torque Tbrake, step 62.

The brake torque Tbrake may be determined based on the speed measure, the speed command vr and the proportional control factor Kv. It may more particularly be determined as:

$$Tbrake = Kv * (vr - v) \qquad\qquad (1)$$

The dynamic brake torque may thus be determined as the proportional control factor Kv times the difference between the speed of the speed command vr and the speed measure. As the unit of the brake torque Tbrake is N*m and the unit of the speed is rad/s, the proportional control factor Kv will have the unit N*m*s/rad.

The reason that the dynamic brake torque can be determined in this way is that there is no integrating control performed. The controller 34 will not be able to regulate the motor 22 so that the speed of the speed command is reached. The output of the proportional control element 42 $Kv*(vr-v)$ will therefore only provide the torque necessary to counteract the brake torque Tbrake. Therefore, the difference in speed will directly correspond to the dynamic brake torque, which can then be directly calculated when the proportional control factor is known. Furthermore, the movement is assumed to be so small that changes in gravitation and friction is negligible.

The dynamic brake torque is then evaluated in order to determine if the dynamic brake torque requirement is fulfilled, step 64.

The evaluation may involve an evaluation of only the determined dynamic brake torque. In this case the determined dynamic brake torque may be compared with a torque threshold and the requirement is deemed to be fulfilled if the threshold is exceeded. As an alternative it is possible to make a number of different brake torque determinations using different speed command values and proportional control factor settings. The dynamic brake torque determination and evaluation may thus be performed for a number of different speed commands and possibly also different proportional control factors. The determined dynamic brake torques may then be combined, for instance averaged, and the combination compared with a threshold.

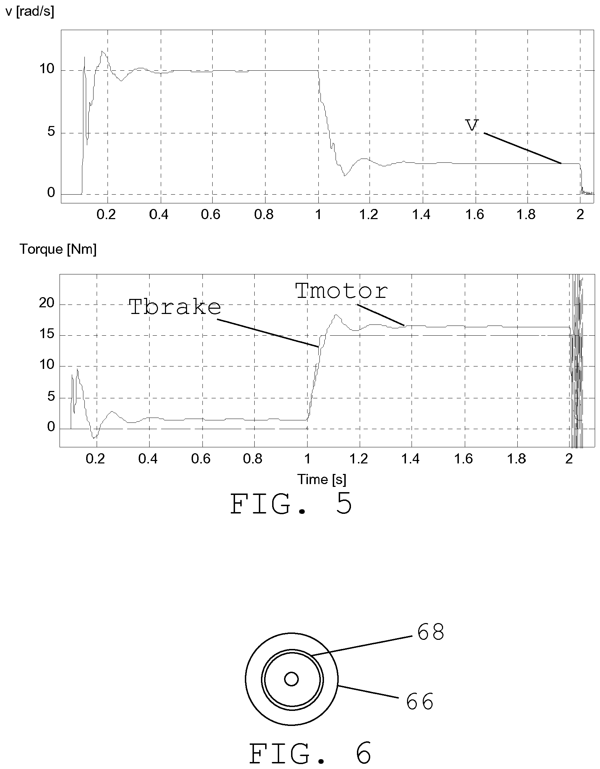

Fig. 5 shows the results of a simulation of the speed v, the dynamic brake torque Tbrake and the motor torque Tmotor. The simulation results are obtained when the settings vr = 10 rad/s and Kv = 2 are used. The integrating activity is here stopped after 0.8 s and the brake activated at 1 s with a ramp time of 50 ms. It can be seen that the stable speed level after application of the brake is 2.5 rad/s, which when applied in equation (1) is 15 Nm. It can also be seen that the simulated braking torque has the same value.

The invention has a number of advantages. As can be seen it is not necessary to measure the torque. It can be determined using normal control factors, measurements and commands present in a robot controller. This simplifies the implementation in that it is possible to provide the invention as an additional function in a robot controller, which is an existing device. It is also easy to retrofit existing robot controllers for implementing the invention.

The determination of the dynamic brake torque is furthermore safe and reliable.

The method described above can be varied in a number of ways. In a second embodiment the determining of if the dynamic brake torque of the brake fulfils a dynamic brake torque requirement using the speed command vr, the proportional control factor Kv and the speed v of the motor after brake activation is done through setting the proportional control factor Kv and speed command vr to correspond to the dynamic brake torque requirement.

They may furthermore be set so that the speed command times the proportional control factor is equal to the requirement or threshold.

This means that if the threshold is Tbrake_threshold, then

$$Kv * vr = Tbrake\_threshold \qquad (2)$$

If the brake is activated for this setting (with the integrating activity disabled), it is immediately clear that the dynamic brake torque requirement is fulfilled if the brake is able to stop the rotation of the joint. A zero motor speed where the joint stops moving, thus signals the fulfilment of the brake torque requirement. There is no need to investigate speed stabilization after the activation of the brake. There is also no need to obtain speed measurements.

This has the advantage of providing a clear and direct indication of the fulfillment of the requirements that does not require any additional indications on a display or other user interface. It is enough to look at the robot joint being tested and see that it stops moving.

The different units and elements of the torque evaluating device 32 and thereby also the torque evaluating unit 36 may be provided in the form of one or more processors together with computer program memory including computer program code for performing the functions of these units and elements. As an alternative they may be provided in the form of one or more Application Specific Integrated Circuits (ASIC) or Field-Programmable Gate Arrays (FPGA). This computer program code may also be provided on one or more data carriers which perform the functionality of the torque evaluating device and especially of the torque evaluating unit when the program code thereon is being loaded in a computer forming the torque evaluating device. One such data carrier 66 with computer program code 68, in the form of a CD ROM disc, is schematically shown in fig. 6. Such computer program may as an alternative be provided on a server and downloaded therefrom into the computer forming the torque evaluating device.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore the present invention is only to be limited by the following claims.

**Claims**

1. A method for evaluating a dynamic brake torque of a robot joint with a motor (22) controlled via a robot controller (34) comprising an integrating control element (44) and a proportional control element (42) having a proportional control factor (Kv), the method comprising the steps of:

   - providing (50) the robot controller with a speed command (vr);
   - upon reaching (52) a stable speed level set by the speed command, ensuring that no integrating action is performed by the robot controller;
   - activating (56) a brake (20) of the motor; and
   - determining if the dynamic brake torque (Tbrake) of the brake fulfils a dynamic brake torque requirement using the speed command (vr), the proportional control factor (Kv) and the speed (v) of the motor after brake activation.

2. The method according to claim 1, wherein the ensuring that no integrating action is performed comprises disabling (54) integrating control.

3. The method according to claim 1 or 2, wherein the determining of if the dynamic brake torque fulfils the dynamic brake torque requirement comprises obtaining (60) at least one measurement of the speed of the motor after speed stabilisation (58) in order to obtain a speed measure; determining (62) a dynamic brake torque based on the speed measure, the proportional control factor and the speed command; and evaluating (64) the determined dynamic brake torque with regard to fulfilling the dynamic brake torque requirement.

4. The method according to claim 3, wherein the dynamic brake torque is determined as the proportional control factor (Kv) times the difference between the speed of the speed command (vr) and the speed measure.

5. The method according to claim 3 or 4, further comprising averaging a number of speed measurements (v) obtained after speed stabilisation in order to obtain the speed measure.

6. The method according to any of claims 3 -5, wherein the dynamic brake torque determination and evaluation are performed for a number of different speed commands.

7. The method according to claim 1 or 2, wherein the speed command (vr) and proportional control factor (Kv) are set to correspond to the dynamic brake torque requirement, where the dynamic brake torque requirement is fulfilled if the joint stops moving.

8. A device (32) for evaluating a dynamic brake torque of a robot joint with a motor (22) controlled via a robot controller (34) comprising an integrating control element (44) and a proportional control element (42) having a proportional control factor (Kv),
   the device (32) comprising a brake torque evaluating unit (36) configured to

   - provide the robot controller (34) with a speed command (vr);
   - upon the motor reaching a stable speed level set by the speed command, ensure that no integrating action is performed by the robot controller;
   - activate a brake (20) of the motor; and
   - determine if the dynamic brake torque (Tbrake) of the brake fulfils a dynamic brake torque requirement using the speed command (vr), the proportional control factor (Kv) and the speed (v) of the motor after brake activation.

9. The device according to claim 8, wherein the brake torque evaluating unit is configured to control the robot controller (34) to discontinue integrating control when ensuring that no integrating action is performed.

10. The device according to claim 8 or 9, wherein the brake torque evaluating unit, when determining if the dynamic brake torque fulfils the dynamic brake torque requirement, is configured to obtain at least one measurement of the speed of the motor after speed stabilisation in order to obtain a speed measure; determine a dynamic brake torque based on the speed measure, the proportional control factor and the speed command, and evaluate the determined dynamic brake torque with regard to fulfilling the dynamic brake torque requirement.

11. The device according to claim 10, wherein the brake torque evaluating unit (36) is configured to determine the dynamic brake torque as the proportional control factor (Kv) times the difference between the speed of the speed command (vr) and the speed measure.

12. The device according to claim 10 or 11, wherein brake torque evaluating unit (36) is configured to average a number of speed measurements (v) obtained after speed stabilisation in order to obtain the speed measure.

13. The device according to any of claims 10 - 12, wherein the brake torque evaluating unit (36) is configured to perform dynamic brake torque determination and evaluation for a number of different speed commands.

14. The device according to claim 8 or 9, wherein the brake torque evaluating unit (36) is configured to set the speed command (vr) and proportional control factor (Kv) to correspond to the dynamic brake torque requirement, where the dynamic brake torque requirement is fulfilled if the joint stops moving.

15. The device according to any of claims 8 - 14, further comprising the robot controller (34).

16. A robot arrangement comprising an industrial robot (10) with at least one motor (22) for moving a corresponding joint, a robot controller (34) comprising an integrating control element (44) and a proportional control element (42) having a proportional control factor (Kv), and a device (32) according to claim 8 for evaluating a dynamic brake torque of the robot joint using the motor (22) and robot controller (34).

17. A computer program product for evaluating a dynamic brake torque of a robot joint with a motor (22) controlled via a robot controller (32), the computer program product comprising a data carrier (66) with computer program code (68) which when run in a brake torque evaluating unit (36) of a device (32) for evaluating a dynamic brake torque, causes the brake torque evaluating unit to:

   - provide the robot controller with a speed command(vr);
   - upon the motor reaching a stable speed level set by the speed command, ensure that no integrating action is performed by the robot controller (34);
   - activate a brake (20) of the motor; and
   - determine if the dynamic brake torque (Tbrake) of the brake fulfils a dynamic brake torque requirement using the speed command (vr), the proportional control factor (Kv) and the speed (v) of the motor after brake activation.


**Patentansprüche**

1. Verfahren zum Auswerten eines dynamischen Bremsdrehmoments einer Roboterverbindung mit einem Motor (22), der über eine Robotersteuerung (34) gesteuert wird, die ein integrierendes Steuerungselement (44) und ein proportionales Steuerungselement (42) umfasst, das einen proportionalen Steuerungsfaktor (Kv) aufweist, das Verfahren die folgenden Schritte umfassend:

   - Bereitstellen (50) eines Geschwindigkeitsbefehls (vr) an die Robotersteuerung;
   - bei Erreichen (52) eines stabilen Geschwindigkeitslevels, der durch den Geschwindigkeitsbefehl eingestellt wird, Sicherstellen, dass keine integrierende Aktion durch die Robotersteuerung durchgeführt wird;
   - Aktivieren (56) einer Bremse (20) des Motors; und
   - Bestimmen unter Verwendung des Geschwindigkeitsbefehls (vr), des proportionalen Steuerungsfaktors (Kv) und der Geschwindigkeit (v) des Motors nach Bremsaktivierung, wenn das dynamische Bremsdrehmoment (Tbrake) der Bremse eine dynamische Bremsdrehmomentanforderung erfüllt.

2. Verfahren nach Anspruch 1, wobei das Sicherstellen, dass keine integrierende Aktion durchgeführt wird, Deaktivieren (54) einer integrierenden Steuerung umfasst.

3. Verfahren nach Anspruch 1 oder 2, wobei das Bestimmen, wenn das dynamische Bremsdrehmoment die dynamische Bremsdrehmomentanforderung erfüllt, Ermitteln (60) mindestens einer Messung der Geschwindigkeit des Motors nach einer Geschwindigkeitsstabilisierung (58), um ein Geschwindigkeitsmaß zu ermitteln; Bestimmen (62) eines dynamischen Bremsdrehmoments auf der Grundlage des Geschwindigkeitsmaßes, des proportionalen Steuerungsfaktors und des Geschwindigkeitsbefehls; und Auswerten (64) des bestimmten dynamischen Bremsdrehmoments hinsichtlich eines Erfüllens der dynamischen Bremsdrehmomentanforderung umfasst.

4. Verfahren nach Anspruch 3, wobei das dynamische Bremsdrehmoment als der proportionale Steuerungsfaktor (Kv) mal der Differenz zwischen der Geschwindigkeit des Geschwindigkeitsbefehls (vr) und dem Geschwindigkeitsmaß bestimmt wird.

5. Verfahren nach Anspruch 3 oder 4, weiterhin umfassend Mitteln einer Anzahl von Geschwindigkeitsmessungen (v), die nach einer Geschwindigkeitsstabilisierung ermittelt wurden, um das Geschwindigkeitsmaß zu ermitteln.

6. Verfahren nach einem der Ansprüche 3 bis 5, wobei die dynamische Bremsdrehmomentbestimmung und -Auswertung für eine Anzahl verschiedener Geschwindigkeitsbefehle durchgeführt werden.

7. Verfahren nach Anspruch 1 oder 2, wobei der Geschwindigkeitsbefehl (vr) und der proportionale Steuerungsfaktor (Kv) eingestellt sind, der dynamischen Bremsdrehmomentanforderung zu entsprechen, wobei die dynamische Bremsdrehmomentanforderung erfüllt ist, wenn die Verbindung sich zu bewegen aufhört.

8. Vorrichtung (32) zum Auswerten eines dynamischen Bremsdrehmoments einer Roboterverbindung mit einem Motor (22), der über eine Robotersteuerung (34) gesteuert wird, die ein integrierendes Steuerungselement (44) und ein proportionales Steuerungselement (42) umfasst, das einen proportionalen Steuerungsfaktor (Kv) aufweist, die Vorrichtung (32) eine Bremsdrehmoment-Auswertungseinheit (36) umfassend, die konfiguriert ist, um

   - der Robotersteuerung (34) einen Geschwindigkeitsbefehl (vr) bereitzustellen;
   - wenn der Motor einen stabilen Geschwindigkeitslevel erreicht, der durch den Geschwindigkeitsbefehl eingestellt wird, sicherzustellen, dass keine integrierende Aktion durch die Robotersteuerung durchgeführt wird;
   - eine Bremse (20) des Motors zu aktivieren; und
   - unter Verwendung des Geschwindigkeitsbefehls (vr), des proportionalen Steuerungsfaktors (Kv) und der Geschwindigkeit (v) des Motors nach Bremsaktivierung zu bestimmen, wenn das dynamische Bremsdrehmoment (Tbrake) der Bremse eine dynamische Bremsdrehmomentanforderung erfüllt.

9. Vorrichtung nach Anspruch 8, wobei die Bremsdrehmoment-Auswertungseinheit konfiguriert ist, die Robotersteuerung (34) beim Sicherstellen, dass keine integrierende Aktion durchgeführt wird, zu steuern, eine integrierende Steuerung abzubrechen.

10. Vorrichtung nach Anspruch 8 oder 9, wobei die Bremsdrehmoment-Auswertungseinheit beim Bestimmen, wenn das dynamische Bremsdrehmoment die dynamische Bremsdrehmomentanforderung erfüllt, konfiguriert ist, mindestens eine Messung der Geschwindigkeit des Motors nach einer Geschwindigkeitsstabilisierung zu ermitteln, um ein Geschwindigkeitsmaß zu ermitteln; ein dynamisches Bremsdrehmoment auf der Grundlage des Geschwindigkeitsmaßes, des proportionalen Steuerungsfaktors und des Geschwindigkeitsbefehls zu bestimmen, und das bestimmte dynamische Bremsdrehmoment hinsichtlich eines Erfüllens der dynamischen Bremsdrehmomentanforderung auszuwerten.

11. Vorrichtung nach Anspruch 10, wobei die Bremsdrehmoment-Auswertungseinheit (36) konfiguriert ist, das dynamische Bremsdrehmoment als den proportionalen Steuerungsfaktor (Kv) mal die Differenz zwischen der Geschwindigkeit des Geschwindigkeitsbefehls (vr) und dem Geschwindigkeitsmaß zu bestimmen.

12. Vorrichtung nach Anspruch 10 oder 11, wobei die Bremsdrehmoment-Auswertungseinheit (36) konfiguriert ist, eine Anzahl von Geschwindigkeitsmessungen (v) zu mitteln, die nach einer Geschwindigkeitsstabilisierung ermittelt wurden, um das Geschwindigkeitsmaß zu ermitteln.

13. Vorrichtung nach einem der Ansprüche 10 bis 12, wobei die Bremsdrehmoment-Auswertungseinheit (36) konfiguriert ist, eine dynamische Bremsdrehmomentbestimmung und -Auswertung für eine Anzahl verschiedener Geschwindigkeitsbefehle durchzuführen.

14. Vorrichtung nach Anspruch 8 oder 9, wobei die Bremsdrehmoment-Auswertungseinheit (36) konfiguriert ist, den Geschwindigkeitsbefehl (vr) und den proportionalen Steuerungsfaktor (Kv) einzustellen, der dynamischen Bremsdrehmomentanforderung zu entsprechen, wobei die dynamische Bremsdrehmomentanforderung erfüllt ist, wenn die Verbindung aufhört sich zu bewegen.

15. Vorrichtung nach einem der Ansprüche 8 bis 14, weiterhin die Robotersteuerung (34) umfassend.

16. Roboteranordnung, umfassend einen Industrieroboter (10) mit mindestens einem Motor (22) zum Bewegen einer entsprechenden Verbindung, eine Robotersteuerung (34), die ein integrierendes Steuerungselement (44) und ein proportionales Steuerungselement (42) mit einem proportionalen Steuerungsfaktor (Kv) umfasst, und eine Vorrichtung (32) nach Anspruch 8 zum Auswerten eines dynamischen Bremsdrehmoments der Roboterverbindung unter Verwendung des Motors (22) und der Robotersteuerung (34).

17. Computerprogrammprodukt zum Auswerten eines dynamischen Bremsdrehmoments einer Roboterverbindung mit einem Motor (22), der über eine Robotersteuerung (32) gesteuert wird, das Computerprogrammprodukt einen Datenträger (66) mit Computerprogrammcode (68) umfassend, der, wenn er in einer Bremsdrehmoment-Auswertungseinheit (36) einer Vorrichtung (32) zum Auswerten eines dynamischen Bremsdrehmoments ausgeführt wird, bewirkt, dass die Bremsdrehmoment-Auswertungseinheit:

- der Robotersteuerung einen Geschwindigkeitsbefehl (vr) bereitstellt;
- wenn der Motor einen stabilen Geschwindigkeitslevel erreicht, der durch den Geschwindigkeitsbefehl eingestellt wird, sicherstellt, dass keine integrierende Aktion durch die Robotersteuerung (34) durchgeführt wird;
- eine Bremse (20) des Motors aktiviert; und
- unter Verwendung des Geschwindigkeitsbefehls (vr), des proportionalen Steuerungsfaktors (Kv) und der Geschwindigkeit (v) des Motors nach Bremsaktivierung bestimmt, wenn das dynamische Bremsdrehmoment (Tbrake) der Bremse eine dynamische Bremsdrehmomentanforderung erfüllt.

## Revendications

1. Procédé d'évaluation d'un couple de freinage dynamique d'une articulation de robot avec un moteur (22) commandé par un dispositif de commande de robot (34) comprenant un élément de commande par intégration (44) et un élément de commande proportionnelle (42) ayant un facteur de commande proportionnelle (Kv), le procédé comprenant les étapes consistant à :

- fournir (50) une commande de vitesse (vr) au dispositif de commande de robot ;
- au moment d'atteindre (52) un niveau de vitesse stable réglé par la commande de vitesse, garantir qu'aucune action d'intégration n'est réalisée par le dispositif de commande de robot ;
- activer (56) un frein (20) du moteur ; et
- déterminer si le couple de freinage dynamique (Tbrake) du frein satisfait à une exigence de couple de freinage dynamique, au moyen de la commande de vitesse (vr), du facteur de commande proportionnelle (Kv) et de la vitesse (v) du moteur après activation du frein.

2. Procédé selon la revendication 1, dans lequel la garantie qu'aucune action d'intégration n'est réalisée consiste à désactiver (54) la commande par intégration.

3. Procédé selon la revendication 1 ou 2, dans lequel la détermination de si le couple de freinage dynamique satisfait à l'exigence de couple de freinage dynamique consiste à obtenir (60) au moins une mesure de la vitesse du moteur après stabilisation de la vitesse (58) afin d'obtenir une mesure de vitesse ; déterminer (62) un couple de freinage dynamique sur la base de la mesure de vitesse, du facteur de commande proportionnelle et de la commande de vitesse ; et évaluer (64) le couple de freinage dynamique quant à la satisfaction à l'exigence de couple de freinage dynamique.

4. Procédé selon la revendication 3, dans lequel le couple de freinage dynamique est déterminé comme étant le facteur de commande proportionnelle (Kv) fois la différence entre la vitesse de la commande de vitesse (vr) et la mesure de vitesse.

5. Procédé selon la revendication 3 ou 4, consistant en outre à calculer la moyenne d'un nombre de mesures de vitesse (v) obtenues après stabilisation de la vitesse afin d'obtenir la mesure de vitesse.

6. Procédé selon l'une quelconque des revendications 3 à 5, dans lequel la détermination et l'évaluation du couple de freinage dynamique sont réalisées pour un nombre de différentes commandes de vitesse.

7. Procédé selon la revendication 1 ou 2, dans lequel la commande de vitesse (vr) et le facteur de commande proportionnelle (Kv) sont réglés pour correspondre à l'exigence de couple de freinage dynamique, l'exigence de couple de freinage dynamique étant satisfaite si le mouvement de l'articulation est arrêté.

**8.** Dispositif (32) d'évaluation d'un couple de freinage dynamique d'une articulation de robot avec un moteur (22) commandé par un dispositif de commande de robot (34) comprenant un élément de commande par intégration (44) et un élément de commande proportionnelle (42) ayant un facteur de commande proportionnelle (Kv), le dispositif (32) comprenant une unité d'évaluation de couple de freinage (36) configurée pour :

- fournir une commande de vitesse (vr) au dispositif de commande de robot (34) ;
- au moment où le moteur atteint un niveau de vitesse stable réglé par la commande de vitesse, garantir qu'aucune action d'intégration n'est réalisée par le dispositif de commande de robot ;
- activer un frein (20) du moteur ; et
- déterminer si le couple de freinage dynamique (Tbrake) du frein satisfait à une exigence de couple de freinage dynamique, au moyen de la commande de vitesse (vr), du facteur de commande proportionnelle (Kv) et de la vitesse (v) du moteur après activation du frein.

**9.** Dispositif selon la revendication 8, dans lequel l'unité d'évaluation de couple de freinage est configurée pour commander le dispositif de commande de robot (34) pour interrompre une commande par intégration quand il est garanti qu'aucune action d'intégration n'est réalisée.

**10.** Dispositif selon la revendication 8 ou 9, dans lequel l'unité d'évaluation de couple de freinage, lors de la détermination de si le couple de freinage dynamique satisfait à l'exigence de couple de freinage dynamique, est configurée pour obtenir au moins une mesure de la vitesse du moteur après stabilisation de la vitesse afin d'obtenir une mesure de vitesse ; déterminer un couple de freinage dynamique sur la base de la mesure de vitesse, du facteur de commande proportionnelle et de la commande de vitesse ; et évaluer le couple de freinage dynamique quant à la satisfaction à l'exigence de couple de freinage dynamique.

**11.** Dispositif selon la revendication 10, dans lequel l'unité d'évaluation de couple de freinage (36) est configurée pour déterminer le couple de freinage comme étant le facteur de commande proportionnelle (Kv) fois la différence entre la vitesse de la commande de vitesse (vr) et la mesure de vitesse.

**12.** Dispositif selon la revendication 10 ou 11, dans lequel l'unité d'évaluation de couple de freinage (36) est configurée pour calculer la moyenne d'un nombre de mesures de vitesse (v) obtenues après stabilisation de la vitesse afin d'obtenir la mesure de vitesse.

**13.** Dispositif selon l'une quelconque des revendications 10 à 12, dans lequel l'unité d'évaluation de couple de freinage (36) est configurée pour réaliser la détermination et l'évaluation du couple de freinage dynamique pour un nombre de différentes commandes de vitesse.

**14.** Dispositif selon la revendication 8 ou 9, dans lequel l'unité d'évaluation de couple de freinage (36) est configurée pour régler la commande de vitesse (vr) et le facteur de commande proportionnelle (Kv) pour correspondre à l'exigence de couple de freinage dynamique, l'exigence de couple de freinage dynamique étant satisfaite si le mouvement de l'articulation est arrêté.

**15.** Dispositif selon l'une quelconque des revendications 8 à 14, comprenant en outre le dispositif de commande de robot (34).

**16.** Agencement de robot comprenant un robot industriel (10) avec au moins un moteur (22) pour déplacer une articulation correspondante, un dispositif de commande de robot (34) comprenant un élément de commande par intégration (44) et un élément de commande proportionnelle (42) ayant un facteur de commande proportionnelle (Kv), et un dispositif (32) selon la revendication 8 pour évaluer un couple de freinage dynamique de l'articulation de robot au moyen du moteur (22) et du dispositif de commande de robot (34).

**17.** Produit de programme informatique pour l'évaluation d'un couple de freinage dynamique d'une articulation de robot avec un moteur (22) commandé par l'intermédiaire d'un dispositif de commande de robot (32), le produit de programme informatique comprenant un support de données (66) avec un code de programme informatique (68) qui, lorsqu'il est exécuté dans une unité d'évaluation de couple de freinage (36) d'un dispositif (32) d'évaluation d'un couple de freinage dynamique, amène l'unité d'évaluation de couple de freinage à :

- fournir une commande de vitesse (vr) au dispositif de commande de robot ;
- au moment où le moteur atteint un niveau de vitesse stable réglé par la commande de vitesse, garantir qu'aucune action d'intégration n'est réalisée par le dispositif de commande de robot (34) ;
- activer un frein (20) du moteur ; et
- déterminer si le couple de freinage dynamique (Tbrake) du frein satisfait à une exigence de couple de freinage dynamique, au moyen de la commande de vitesse (vr), du facteur de commande proportionnelle (Kv) et de la vitesse (v) du moteur après activation du frein.

FIG. 1

FIG. 2

FIG. 3

```
                    ┌──────────────────────────┐        50
                    │       Provide vr         │────────
                    └──────────────────────────┘

                              │
                              │  ◄──────────────────────┐
                              ▼                          │
                        ╱───────────────╲      52        │
                       ╱  Stable speed   ╲────────        │
                       ╲ level reached?   ╱        N ─────┘
                        ╲───────────────╱

                            │ Y
                            ▼
                    ┌──────────────────────────┐        54
                    │   Disable integration    │────────
                    └──────────────────────────┘

                              │
                              ▼
                    ┌──────────────────────────┐        56
                    │     Activate brake       │────────
                    └──────────────────────────┘

                              │
                              │  ◄──────────────────────┐
                              ▼                          │
                        ╱───────────────╲      58        │
                       ╱ Speed stabilized? ╲──────        │
                       ╲                   ╱       N ─────┘
                        ╲───────────────╱

                            │ Y
                            ▼
                    ┌──────────────────────────┐        60
                    │        Obtain v          │────────
                    └──────────────────────────┘

                              │
                              ▼
                    ┌──────────────────────────┐        62
                    │   Determine Tbrake       │────────
                    └──────────────────────────┘

                              │
                              ▼
                    ┌──────────────────────────┐        64
                    │    Evaluate Tbrake       │────────
                    └──────────────────────────┘
```

FIG. 4

v [rad/s]

Torque [Nm]

Time [s]

FIG. 5

FIG. 6

**EP 2 993 000 B1**

**REFERENCES CITED IN THE DESCRIPTION**

**Patent documents cited in the description**

- EP 210978933 A
- WO 2007079950 A
- US 2010058850 A